# EUROPEAN PATENT SPECIFICATION

(11) **EP 1 118 834 B1**
(45) Date of publication and mention of the grant of the patent: **05.04.2006**
(21) Application number: 01830013.7
(22) Date of filing: 12.01.2001
(51) Int. Cl.: G01B 11/10, G01M 17/10

(54) **Device to optically measure the wheels of railway vehicles**
Vorrichtung zur optischen Messung der Räder eines Schienenfahrzeuges
Dispositif pour la mesure optique de roues d'un train

(30) Priority: 19.01.2000 IT RM000029
(43) Date of publication of application: 25.07.2001
(73) Proprietor: Vision Device S.r.l., 66010 Torrevecchia Teatina (Chieti) (IT)
(72) Inventor: Raschiatore, Paolo, 66010 Torrevecchia Teatina (CH) (IT)
(74) Representative: Taliercio, Antonio

(56) References cited:
- EP-A- 0 751 371
- DE-A- 3 912 544
- GB-A- 2 178 169
- US-A- 4 798 963
- US-A- 5 247 338
- US-A- 5 636 026
- US-A- 5 793 492

## Description

This invention relates to an optical system for automatically inspecting and controlling the geometric and dimensional feature of railway vehicle wheels which is based upon employment of artificial vision devices and enables to perform a status analysis of the wheels during the movement of the vehicles upon which they are mounted, thereby eliminating any need to detaching them as well as any need to split up the railway train into individual cars and locomotive. The resulting system, therefore, turns out to be highly reliable and efficient and enables the inspection and control operations to be carried out in easier way and with time durations extremely shorter with respect to conventional techniques and with consequently reduced costs.

It is known that, since the wheels of railway vehicles and the rails are bodies having a high rigidity, the contact therebetween entails high dynamic loads and can cause severe damages to the revolving surfaces, particularly during the braking phases, also due to possible dealignment of the wheels.

In the very first place, the wheels are amenable to be subjected to geometric deformations that generate further overloads acting on the wheels themselves and on the rails.

Only by way of illustration, some usually caused geometric deformations are the local facets and the polygonal deformation of the (front) circular outline of the wheels.

The local facets, that generate the most relevant dynamic overstresses, are caused by blockage of the wheels in braking which in turn causes material removal from the contact surfaces between the wheels and the rail.

Even if such geometric deformations are subsequently offset in the course of the time by the further deformations generated on the already deformed portions, their dimensional extension, which is initially restricted to some centimetres, tend to be extended up to some tens centimetres. This generates the so called polygonal deformation that sometime turns out to be more dangerous than the local facets themselves, since it causes load variations of longer duration that are only negligibly offset by the wheel inertia.

When the movement speed of the railway vehicle and consequently the rotation speed of the wheels are increased, the wheel inertia tends to cause a detachment of the wheels from the rail at the local facets as well as at the flats of the polygonal deformations, thereby causing even higher stresses on the wheels and on the rails, of increasing amounts with increasing dimensions of the facets and of the flats as well as with increasing axial load.

Such stresses are also propagated to the sleepers and to the ballast and promote a rapid wear of the wheels, of the drive members and of the rails, which entails a degradation of their characteristics and requires frequent maintainment intervents on the vehicles and on the railway lines besides causing a high acoustic pollution due to the pulse noise generated by shock contacts between the wheels and the rails.

A fatigue breakage of wheels, drive members and rails can be avoided and a reduction of the acoustic pollution can be obtained only by periodically carrying out a geometric-dimensional check on the wheels in order to detect any abnormal wear condition thereof in comparison to specific wear limits established in such a way as to assure the efficiency and the safety both of the vehicles and of the railway lines.

All conventional control and check methods are based upon disassembling the wheels from the railway vehicles in dedicated maintainment workshops and inspecting them by measurement operations performed by specialised operators using conventional instruments.

All these methods have some severe drawbacks, mainly connected to the complexity of the operations and of the wheel mounting and demounting apparatuses, to the noticeable number of specialised operators involved therein, to the extended duration of the operations and to the consequent high costs to be incurred.

Some approaches have recently been developed aimed at performing the geometric-dimensional control of the wheels without incurring the need to preliminarily disassemble them from the concerned railway vehicle.

In particular, Italian Patent No. 1,264,762 discloses a method and an apparatus for automatically measuring the railway vehicle wheels even while the concerned vehicles are running, thereby eliminating also the need to split the train into individual cars and locomotives. Such method utilises an apparatus that detects the outline of the wheel tread in contact with the rail and includes therefor optical devices positioned aside the rail and comprising detection and measuring optical sensors, an illumination system, an image focusing device and a tracking centring device, by means of which the images of a couple of running wheels are contemporaneously acquired.

Anyway, also this approach has a number of severe drawbacks that substantially inhibit its applicability.

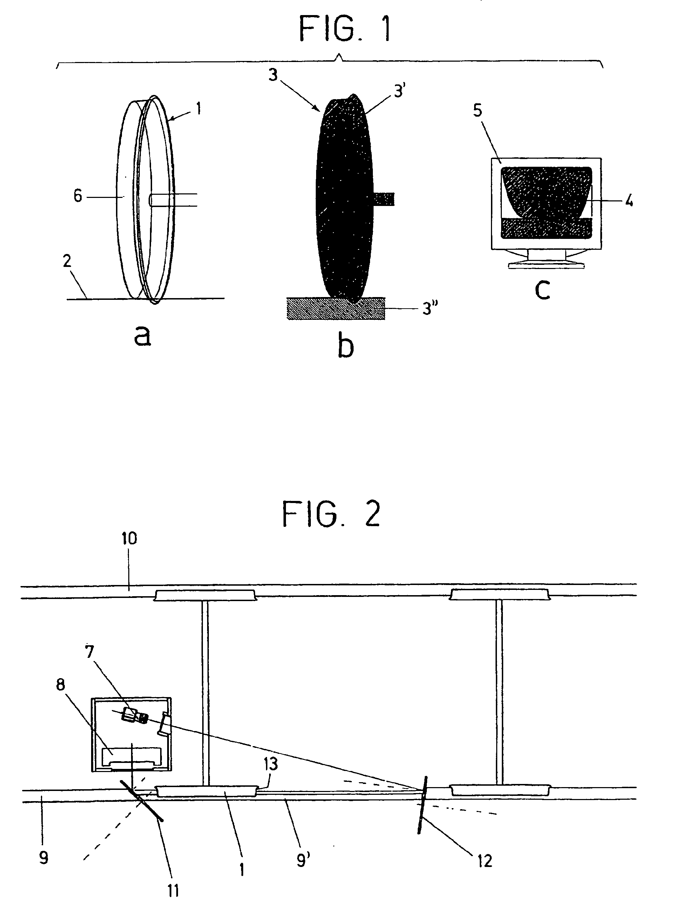

First of all, since the necessary optical devices are positioned aside the rail, the acquired image of the wheel as generated turns out to be scarcely utilisable due to perspective effects. This is clearly illustrated in Figures 1a, 1b and 1c, in which Figure 1a is a perspective view of a wheel 1 as it appears from a lateral observation point on the inner side of rail 2, Figure 1b shows the image 3 (graphically divided into a portion 3' corresponding to wheel 1 and a portion 3" corresponding to rail 2), as it appears from Figure 1a, acquired by an optical measurement and detection sensor positioned in the observation point, and Figure 1c shows the acquired image 4 of the outline of the tread 6 of the wheel 1 in contact with the rail 2, displayed on a display 5. It is apparent from Figure 1 c that the perspective effects make the acquired image 4 substantially useless for any desired geometric-dimensional control.

Furthermore, the image acquisition optical devices are amenable to change their orientation during operation, thereby varying the inclination of the optical axes by means of said tracking centring system, whose driving members should be synchronised with extremely high accuracy with the movement of the running wheel. This degrades the reliability of the measurements and entails an increase in the frequency of the instrument calibration operations, thereby making the geometric-dimensional control method particularly complex.

Lastly, the method and the apparatus as disclosed in the above mentioned Italian Patent do not consider the problem of the dimensional variation of the acquired image caused when the relative distance between the wheels and the detection and measurement sensor is varied.

Another optical system for the geometric inspection of wheels of a moving railway vehicle is known from EP 0 751 371.

The approach suggested according to this invention should be considered as aimed at enabling all above discussed problems to be solved.

It is an object of this invention, therefore, to perform in reliable, efficient , simple and inexpensive way the geometric-dimensional control of railway vehicle wheels even while the concerned vehicles on which they are mounted are running, without incurring the need to preliminarily disassemble them from the railway vehicle or to split the train into individual cars and locomotives.

Specific subject matter of this invention is an optical system for automatic geometric-dimensional inspection and control of the wheels of railway vehicles comprising a pair of rails on which a railway vehicle runs, at least one rail of said rail pair including at least one special segment with reduced cross-section, said optical system further comprising at least one optical assembly including an optical device for acquisition of two-dimensional and/or three-dimensional images, a light source emitting a light beam, a first mirror and a second mirror having corresponding optical axes, said optical device being positioned inside or outside of said rail pair at a first fixed distance, said light source being positioned inside or outside of said rail pair at a second fixed distance, during the control operation being effected on a wheel running on said at least one special segment, said first mirror relaying the light beam coming from said light source along a direction parallel to the corresponding rail and said second mirror relaying the light beam coming from the first mirror toward said optical device, each of said first mirror, and second mirror being provided with a movement device arranged for displacing it from the path of the wheels in synchronism with the passage of a wheel while the orientation of the corresponding optical axis with respect to the wheel, to the optical device and to the light source is maintained constant

Preferably according to this invention, said optical device for acquisition of two-dimensional and/or three-dimensional images is a matrix TV camera and even more preferably a matrix TV camera implemented in charge transfer technology or Charge Coupled Device (CCD) technology.

Also according to this invention, said light source can be a light plane illuminator preferably an illuminator with parallel light.

In further accord to this invention, at least one special segment of the corresponding rail can have a reduced cross-section so as to expose the inner portion and/or the outer portion of the wheel in contact therewith.

Further according to this invention, said movement device is actuated by means of a mechanical control and/or an electronic control operated by said wheel.

Also according to this invention, said mechanical control can be a mechanical lever and/or a cam.

Additionally according to this invention, said electronic control can comprise a proximity sensor and/or a photocell that drive an electric or hydraulic or pneumatic actuator.

Preferably according to this invention, the electronic system also comprises at least one electronic data processing unit that manages the images acquired by said optical device and/or manages the optical system.

Further according to this invention, said at least one electronic data processing unit can receive the position information concerning the position of the wheel from suitable sensors, preferably proximity sensors and /or photocells, and it can correct the dimensions of the images acquired by said optical device as a function of the position of said wheel.

Also according to this invention, said at least one electronic data processing unit receives information concerning the movement speed of said wheel from speed detection devices.

Further according to this invention, said at least one electronic data processing unit is adapted to perform data interpolation methods in order to establish the wheel position based upon the information concerning the movement speed of said wheel.

Preferably according to this invention, said optical system includes a single optical assembly.

Further according to this invention, at least one optical assembly is translated along a direction parallel to said rail pair.

This invention will be now described by way of illustration and not by way of limitation according to its preferred embodiments, by particularly referring to the Figures of the enclosed drawings, in which:
Figure 1a is a perspective view of a wheel of a railway vehicle as it appears from a lateral observation point on the inner side of the rail according to the prior art;
Figure 1b shows the image deriving from Figure 1a as acquired by an optical sensor;
Figure 1c shows the portion of the image of Figure 1b corresponding to the outline of the wheel tread in contact with the rail, displayed on a display;
Figure 2 shows the preferred embodiment of an optical system for geometric-dimensional control according to this invention during operation thereof;
Figure 3a shows a view axially aligned with the movement direction of a wheel of a railway vehicle inserted into the system illustrated in Figure 2;
Figure 3b shows the image deriving from Figure 3a as acquired by the system of Figure 2;
Figure 3c shows the portion of the image of Figure 3b corresponding to the outline of the wheel tread in contact with the rail, displayed on a display;
Figure 4a shows the system of Figure 2 during an inspection operation performed on a wheel positioned in a first position;
Figure 4b shows the portion of the image as acquired by the system of Figure 4a corresponding to the outline of the wheel tread in contact with the rail, displayed on a display;
Figure 5a shows the system of Figure 2 during an inspection operation performed on a wheel positioned in a second position;
Figure 5b shows the portion of the image as acquired by the system of Figure 5a corresponding to the outline of the wheel tread in contact with the rail, displayed on a display;
Figure 6a shows the system of Figure 2 during an inspection operation performed on a wheel positioned in a third position;
Figure 6b shows the portion of the image as acquired by the system of Figure 6a corresponding to the outline of the wheel tread in contact with the rail, displayed on a display.

Figure 2 shows the preferred embodiment of an optical system for automatic geometric-dimensional control according to this invention during acquisition of the image of wheel 1 to be monitored.

The system comprises a matrix TV camera 7, preferably implemented in a charge transfer technology or CCD (Charge Coupling Device) and a light plane illuminator 8, preferably with parallel light TV camera 7 and illuminator 8 are positioned between the two rails 9 and 10. A first mirror 11 relays the light beam coming from illuminator 8 along the path of wheel 1, namely in a direction parallel to rail 9 upon which said wheel 1 runs. A second mirror 12 relays the light beam coming from the first mirror 11 toward TV camera 7 that consequently is enabled to acquire by contrast the image of the wheel 1 to be monitored.

In other words, the assembly of illuminator 8, first mirror 11, second mirror 12 and TV camera 7 forms an optical path in which the image of the outline of said wheel 1, as acquired by said TV camera 7, is always aligned with the movement direction of the wheel itself.

The rail 9 on which wheel 1 to be controlled is runned comprises, between the first mirror 11 and the second mirror 12, a special segment 9' having a restricted section so as to leave the tread outline inner portion 13 of the wheel 1 contacting the special segment 9' of said rail 9 in exposed condition.

The optical system according to this invention further comprises, for each of said two mirrors 11 and 12, a movement device, not shown, which automatically and rapidly displaces the corresponding mirror in synchronism with the passage of wheel 1. In particular, said movement device displaces the corresponding mirror in the plane of the mirror itself, without varying the orientation of the optical axis with respect to the wheel 1, to the illuminator 8 and to TV camera 7, not even in the presence of vibrations in the movement plane. Preferably, the movement device can be actuated by means of a mechanical control, such as a mechanical lever and/or a cam operated by wheel 1 , and/or an electronic control, such as a proximity sensor and/or a photoelectric cell, which detect the passage of wheel 1 and drive an electric, pneumatic or hydraulic actuator. Should an electronic control and a mechanical control be contemporaneously present, the latter acts as a safety control to remedy the possible failure of the first one.

The optical system according to this invention also comprises an electronic data processing unit, not shown, adapted to construe the images acquired by said TV camera 7 and to manage all components of the whole system.

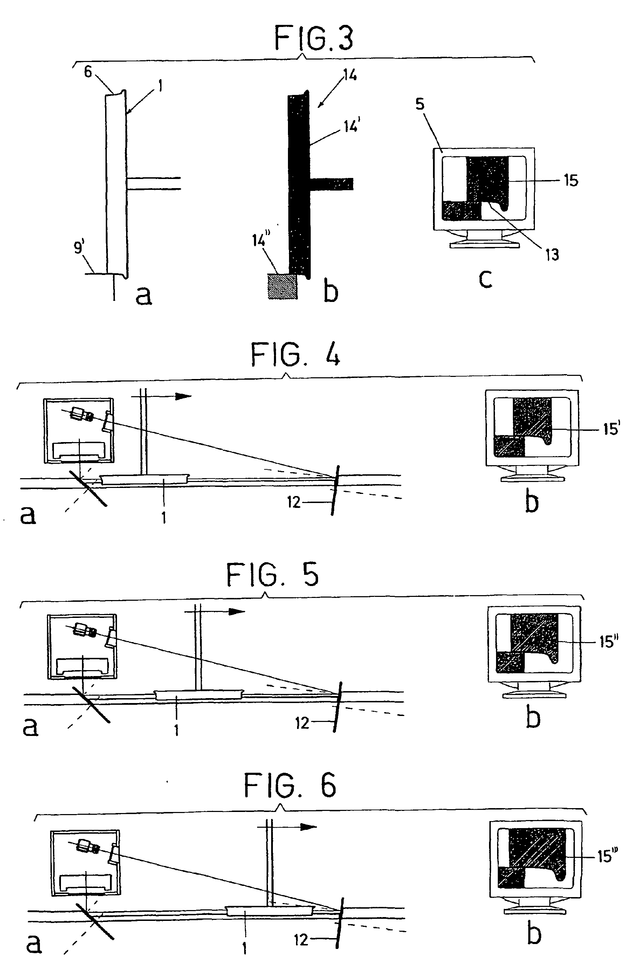

In order to better understand the image type acquired by said TV camera, reference can be made to Figures 3a, 3b and 3c.

Figure 3a shows a view axially aligned with the movement direction of the wheel 1 running on said special segment 9' of rail 9. Figure 3b shows the image 14 that can be acquired by an optical sensor device, such as the TV camera 7; in particular, the image 14 is graphically divided into a portion 14' corresponding to wheel 1 and a portion 14" corresponding to said special segment 9' of rail 9. Figure 3c shows the image 15 acquired by the TV camera 7, as displayed on a display 5, corresponding to the outline of tread 6 of wheel 1 contacting the special segment 9' of said rail 9.

Figure 3c clearly evidences that the inner portion 13 of the tread outline of wheel 1 is completely visible and exploitable for geometric-dimensional control of the wheel 1.

By referring to Figures 4a, 4b, 5a, 5b, 6a and 6b, it can be observed that, as the distance between the wheel 1 and the second mirror 12 is decreased, the length of the optical path separating the wheel 1 from the TV camera 7 is also decreased and the dimensions of the image 15', 15" and 15"' acquired by the TV camera 7 are correspondingly increased.

The electronic data processing unit of the optical system according to this invention is adapted to correct such dimension variation of the acquired images by keeping the variable scale coefficients between the various images into account, on the base of the corresponding positions of the wheel 1. In particular, the information regarding the position of wheel 1 in the special segment 9' of the rail 9 can be furnished to the electronic data processing unit by suitable sensors, not shown, which the optical system according to this invention is provided with. Preferably, such position sensors are conventional photocell and/or proximity sensors. The electronic data processing unit could also receive information concerning the advancement speed of the wheel 1 and perform data interpolation methods in order to ascertain the position of the wheel 1 in some portions of the special segment 9' of the rail 9.

In other words, the electronic data processing unit is adapted to calculate the scale coefficients as a function of the position of the wheel 1, so as to permit correcting the dimensions of the images acquired by the TV camera 7 and obtaining the real dimensions of the outline of the tread 6 of the wheel 1 in contact with the special segment 9' of the rail 9.

In other embodiments of this invention, the matrix TV camera 7 can be substituted by a different optical device adapted to acquire two-dimensional and /or three-dimensional images.

Furthermore, in other embodiments of the optical system according to this invention, the TV camera 7 and the illuminator 8 can also be positioned outside of the rail pair 9 and 10 or be positioned on different sides of the rail 9.

Further embodiments of the optical system according to this invention, can be provided with a second optical component assembly comprising a second TV camera, a second illuminator and a second mirror pair, adapted to perform similar geometric-dimensional inspection and control functions on the wheels running on the other rail 10. Of course, provisions can be made for more than one optical assembly operating on the same rail 9 or 10, particularly in those cases in which the interaxial distance between two consecutive wheels is smaller than the circumference of the wheels, thereby inhibiting the possibility to perform the inspection and control function over the whole circumference with a single optical assembly.

Further embodiments of the system according to this invention provide for the TV camera 7 to acquire the image of the whole wheel 1 and not only of the portion contacting the special segment 9' of the rail 9.

Further embodiments of the system according to this invention can provide for more than one reduced cross-section special segment 9' for rail 9. Only by way of exemplification and not by way of limitation, rail 9 could be provided with two reduced cross-section special segments in order to expose the inner portion and the outer portion, respectively, of the tread outline of said wheel 1.

Still further embodiments of the optical system according to this invention can provide for the TV camera 7, the illuminator 8 and the two mirrors 11 and 12 to be integrally translated along the movement direction of wheel 1, particularly in those cases in which the interaxial distance between two consecutive wheels is smaller than the circumference of the wheels.

The automatic geometric-dimensional inspection and control optical system according to this invention can be arranged on a conventional railway line and, therefore, the control function can be exploited in reliable, simple, rapid and inexpensive way, at a frequency much higher than the minimum frequency established by the presently adopted maintainment schedules.

An advantage that can be obtained by exploiting the optical system according to this invention is connected with the substantial elimination of the cumbersome perspective effects that occur in the acquisition of images always in alignment with the movement direction of the wheel to be controlled.

Still an advantage offered by the optical system according to this invention with respect to the conventional apparatuses is to be observed in that the image acquisition devices, particularly illuminator 8 and TV camera 7, are always in stationary and stable position, thereby enhancing the acquisition reliability and noticeably reducing the instrument calibration operation frequency which means a noticeably reduced calibration requirement.

A further advantage offered by the optical system according to this invention with respect to the conventional apparatuses is to be observed in that the two mirrors 11 and 12 are moved along the optical path during the passage of the wheel in the plane of the mirrors themselves, with the orientation of the optical axes remaining constant even in the presence of vibrations in the movement plane, whilst said mirrors remain substantially stationary and stable during the acquisition of the images, thereby eliminating the need of a continuous alignment operation.

Lastly, the optical system according to this invention performs the correction of the dimensions of the image acquired while the wheel position varies, thereby furnishing a correct measure of the real dimensions of the wheel.

The preferred embodiments of this invention have been described and a number of variations have been suggested hereinbefore, but it should expressly be understood that those skilled in the art can make other variations and changes, without so departing from the scope thereof, as defined by the attached claims.

## Claims

1. An optical system for automatic geometric-dimensional inspection and control of the wheels of railway vehicles comprising a pair of rails (9, 10) on which a railway vehicle runs, at least a rail (9) of said rail pair (9, 10) including at least one special segment (9') with reduced cross-section, said optical system further comprising at least one optical assembly including an optical device (7) for acquisition of two-dimensional and/or three-dimensional images, a light source (8) emitting a light beam, a first mirror (11) and a second mirror (12) having corresponding optical axes, said optical device (7) being positioned inside or outside of said rail pair (9, 10) at a first fixed distance, said light source being positioned inside or outside of said rail pair (9, 10) at a second fixed distance, during the control operation being effected on a wheel running on said at least one special segment (9'), said first mirror (11) relaying the light beam coming from said light source (8) along a direction parallel to the corresponding rail (9) and said second mirror (12) relaying the light beam coming from the first mirror (11) toward said optical device (7), each of said first mirror (11) and second mirror (12) being provided with a movement device arranged for displacing it from the path of the wheels (1) in synchronism with the passage of a wheel (1) while the orientation of the corresponding optical axis with respect to the wheel (1), to the optical device (7) and to the light source (8) is maintained constant.

2. An optical system according to claim 1, **characterised in that** said optical device for acquisition of two-dimensional and/or three-dimensional images is a matrix TV camera (7).

3. An optical system according to claim 2, **characterised in that** said matrix TV camera (7) is a matrix TV camera implemented in charge transfer technology or Charge Coupled Device (CCD) technology.

4. An optical system according to any one of the preceding claims, **characterised in that** said light source is a light plane illuminator (8).

5. An optical system according to claim 4, **characterised in that** said illuminator (8) is an illuminator with parallel light.

6. An optical system according to any one of the preceding claims, **characterised in that** at least one special segment (9') of the corresponding rail (9) has a reduced cross-section so as to expose the inner portion (13) and/or the outer portion of the wheel (1) in contact therewith.

7. An optical system according to any one of the preceding claims, **characterised in that** said movement device is actuated by means of a mechanical control and/or an electronic control operated by said wheel (1).

8. An optical system according to claim 7, **characterised in that** said mechanical control is a mechanical lever and/or a cam.

9. An optical system according to claim 7 or 8, **characterised in that** said electronic control comprises a proximity sensor and/or a photocell that drive an electric or hydraulic or pneumatic actuator.

10. An optical system according to any one of the preceding claims, **characterised in that** it further comprises at least one electronic data processing unit that manages the images acquired by said optical device (7) and/or manages the optical system.

11. An optical system according to claim 10, **characterised in that** said at least one electronic data processing unit receives the position information concerning the position of the wheel (1) from suitable sensors and corrects the dimensions of the images acquired by said optical device (7) as a function of the position of said wheel (1).

12. An optical system according to claim 11, **characterised in that** said position sensors that detect the position of the wheel (1) are proximity sensors and /or photocells.

13. An optical system according to claim 10 or 11, **characterised in that** said at least one electronic data processing unit receives information concerning the movement speed of said wheel (1) from speed detection devices.

14. An optical system according to claim 13, **characterised in that** said at least one electronic data processing unit performs data interpolation methods in order to establish the wheel position based upon the information concerning the movement speed of said wheel (1).

15. An optical system according to any one of the preceding claims, **characterised in that** it includes a single optical assembly.

16. An optical system according to any one of the preceding claims, **characterised in that** at least one optical assembly is translated along a direction parallel to said rail pair (9, 10).

## Patentansprüche

1. Optisches System zur automatischen geometrisch-dimensionsbezogenen Inspektion und Überwachung der Räder von Schienenfahrzeugen, umfassend ein Schienenpaar (9, 10), auf dem ein Schienenfahrzeug fährt, wobei mindestens eine Schiene (9) des Schienenpaares (9, 10) mindestens ein Sondersegment (9') mit reduziertem Querschnitt aufweist, das optische System ferner mindestens eine optische Baugruppe, die ein optisches Gerät (7) für die Erfassung von zweidimensionalen und/oder dreidimensionalen Bildern enthält, eine Lichtquelle (8), die einen Lichtstrahl aussendet, einen ersten Spiegel (11) und einen zweiten Spiegel (12) mit entsprechenden optischen Achsen umfasst, wobei das optische Gerät (7) mit einem ersten festen Abstand innerhalb oder außerhalb des Schienenpaares (9, 10) angeordnet ist und die Lichtquelle mit einem zweiten festen Abstand innerhalb oder außerhalb des Schienenpaares (9, 10) angeordnet ist, wobei während der Überwachungsoperation, die ausgelöst wird, wenn ein Rad über das mindestens eine Sondersegment (9') fährt, der erste Spiegel (11) den von der Lichtquelle (8) kommenden Lichtstrahl in einer Richtung parallel zur zugehörigen Schiene (9) weiterleitet und der zweite Spiegel (12) den vom ersten Spiegel (11) kommenden Lichtstrahl zum optischen Gerät (7) weiterleitet und jeder der ersten und zweiten Spiegel (11, 12) mit einer Bewegungseinrichtung versehen ist, die so angeordnet ist, dass sie ihn synchron zur Passage eines Rades (1) aus dem Weg der Räder auslenkt, während die Orientierung der optischen Achse bezüglich des Rades (1), des optischen Gerätes (7) und der Lichtquelle (8) konstant beibehalten wird.

2. Optisches System gemäß Anspruch 1, **dadurch gekennzeichnet, dass** das optische Gerät für die Erfassung von zweidimensionalen und/oder dreidimensionalen Bildern eine Matrix-Fernsehkamera (7) ist.

3. Optisches System gemäß Anspruch 2, **dadurch gekennzeichnet, dass** die Matrix-Fernsehkamera (7) eine Matrix-Fernsehkamera mit implementierter Ladungstransfertechnologie oder CCD-Technologie (Charge-Coupled-Device-Technologie) ist.

4. Optisches System gemäß einem der vorangegangenen Ansprüche, **dadurch gekennzeichnet, dass** die Lichtquelle ein Flächenstrahler (8) ist.

5. Optisches System gemäß Anspruch 4, **dadurch gekennzeichnet, dass** der Strahler (8) ein Strahler mit parallelem Licht ist.

6. Optisches System gemäß einem der vorangegangenen Ansprüche, **dadurch gekennzeichnet, dass** mindestens ein Sondersegment (9') der zugehörigen Schiene (9) einen reduzierten Querschnitt aufweist, um den inneren Teil (13) und/oder den äußeren Teil des Rades (1), das sich mit ihm in Kontakt befindet, zu exponieren.

7. Optisches System gemäß einem der vorangegangenen Ansprüche, **dadurch gekennzeichnet, dass** die Bewegungseinrichtung durch eine mechanische Steuerung und/oder eine elektronische Steuerung betätigt wird, die durch das Rad (1) ausgelöst wird.

8. Optisches System gemäß Anspruch 7, **dadurch gekennzeichnet, dass** die mechanische Steuerung ein mechanischer Hebel und/oder Nocken ist.

9. Optisches System gemäß Anspruch 7 oder 8, **dadurch gekennzeichnet, dass** die elektronische Steuerung einen Näherungssensor und/oder eine Photozelle enthält, die einen elektrischen oder hydraulischen oder pneumatischen Aktuator ansteuern.

10. Optisches System gemäß einem der vorangegangenen Ansprüche, **dadurch gekennzeichnet, dass** es ferner eine elektronische Datenverarbeitungseinheit umfasst, welche die von dem optischen Gerät (7) erfassten Bilder und/oder das optische System verwaltet.

11. Optisches System gemäß Anspruch 10, **dadurch gekennzeichnet, dass** die mindestens eine elektronische Datenverarbeitungseinheit die Positionsinformation betreffend die Position des Rades (1) von geeigneten Sensoren empfängt und die Größen der von dem optischen Gerät (7) erfassten Bilder als Funktion der Position des Rades (1) korrigiert.

12. Optisches System gemäß Anspruch 11, **dadurch gekennzeichnet, dass** die Positionssensoren, welche die Position des Rades (1) ermitteln, Näherungssensoren und/oder Photozellen sind.

13. Optisches System gemäß Anspruch 10 oder 11, **dadurch gekennzeichnet, dass** die mindestens eine elektronische Datenverarbeitungseinheit von Geschwindigkeitsmessvorrichtungen die Bewegungsgeschwindigkeit des Rades (1) betreffende Informationen empfängt.

14. Optisches System gemäß Anspruch 13, **dadurch gekennzeichnet, dass** die mindestens eine elektronische Datenverarbeitungseinheit Dateninterpolationsverfahren ausführt, um, basierend auf der Bewegungsgeschwindigkeit des Rades (1) betreffenden Informationen, die Position des Rades zu ermitteln.

15. Optisches System gemäß einem der vorangegangenen Ansprüche, **dadurch gekennzeichnet, dass** es eine einzelne optische Baugruppe enthält.

16. Optisches System gemäß einem der vorangegangenen Ansprüche, **dadurch gekennzeichnet, dass** mindestens eine optische Baugruppe in einer Richtung parallel zum Schienenpaar (9, 10) bewegt wird.

## Revendications

1. Système optique pour une inspection géométricodimensionnelle automatique et un contrôle des roues d'un véhicule de chemin de fer comprenant une paire de rails (9, 10) sur lesquels un véhicule de chemin de fer se déplace, au moins un rail (9) de ladite paire de rails (9, 10) incluant au moins un segment spécial (9') avec une section réduite, ledit système optique comprenant en outre au moins un ensemble optique incluant un appareil optique (7) pour l'acquisition d'images en deux et/ou trois dimensions, une source lumineuse (8) émettant un faisceau lumineux, un premier miroir (11) et un deuxième miroir (12) ayant des axes optiques correspondants, ledit appareil optique (7) étant situé à l'intérieur ou à l'extérieur de ladite paire de rails (9, 10) à une première distance fixée, ladite source lumineuse étant située à l'intérieur ou à l'extérieur de ladite paire de rails (9, 10) à une deuxième distance fixée, pendant que l'opération de contrôle est effectuée sur une roue se déplaçant sur ledit au moins un segment spécial (9'), ledit premier miroir (11) relayant le faisceau lumineux venant de ladite source lumineuse (8) le long d'une direction parallèle au rail correspondant (9) et ledit deuxième miroir (12) relayant le faisceau lumineux venant du premier miroir (11) vers ledit appareil optique (7), chacun desdits premier miroir (11) et deuxième miroir (12) étant muni d'un appareil de mouvement agencé pour le déplacer du chemin des roues (1) simultanément avec le passage d'une roue (1) alors que l'orientation de l'axe optique correspondant par rapport à la roue (1), à l'appareil optique (7) ou à la source lumineuse (8) est maintenue constante.

2. Système optique selon la revendication 1, **caractérisé en ce que** l'appareil optique pour l'acquisition d'images en deux et/ou trois dimensions est une caméra de télévision matricielle.

3. système optique selon la revendication 2, **caractérisé en ce que** ladite caméra de télévision matriciel (7) est une caméra de télévision matricielle utilisant la technologie du transfert de charge ou la technologie du dispositif à transfert de charge (CCD).

4. Système optique selon l'une quelconque des revendications précédentes, **caractérisé en ce que** ladite source lumineuse est un dispositif d'éclairage à la lumière plane (8).

5. Système optique selon la revendication 4, **caractérisé en ce que** ledit dispositif d'éclairage (8) est un dispositif d'éclairage à lumière parallèle.

6. Système optique selon l'une quelconque des revendications précédentes, **caractérisé en ce que** au moins un segment spécial (9') du rail correspondant (9) a une section réduite de façon à exposer la partie interne (13) et/ou la partie externe de la roue (1) en contact avec celle-ci.

7. Système optique selon l'une quelconque des revendications précédentes, **caractérisé en ce que** ledit appareil de mouvement est actionné par une commande mécanique et/ou une commande électronique activée par ladite roue (1).

8. Système optique selon la revendication 7, **caractérisé en ce que** ladite commande mécanique est une came et/ou un levier mécanique.

9. Système optique selon les revendications 7 ou 8, **caractérisé en ce que** ladite commande électronique comprend un capteur de proximité et/ou une cellule photoélectrique qui commande(nt) un actionneur électrique ou hydraulique ou pneumatique.

10. Système optique selon l'une quelconque des revendications précédentes, **caractérisé en ce qu'**il comprend en outre au moins une unité de traitement électronique des données qui gère les images acquises par ledit appareil optique (7) et/ou gère le système optique.

11. Système optique selon la revendication 10, **caractérisé en ce que** ladite au moins une unité de traitement électronique des données reçoit les informations de position concernant la position de la roue (1) des capteurs appropriés et corrige les dimensions des images acquises par ledit appareil optique (7), en fonction de la position de ladite roue (1).

12. Système optique selon la revendication 11, **caractérisé en ce que** lesdits capteurs de position détectant la position de la roue (1) sont des capteurs de proximité et/ou des cellules photoélectriques.

13. Système optique selon les revendications 10 ou 11, **caractérisé en ce que** ladite au moins une unité de traitement électronique des données reçoit les informations concernant la vitesse de mouvement de ladite roue (1) des appareils de détection de la vitesse.

14. Système optique selon la revendication 13, **caractérisé en ce que** ladite au moins une unité de traitement électronique des données exécute un procédé d'interpolation des données pour établir la position de la roue en se fondant sur les informations concernant la vitesse de mouvement de ladite roue (1).

15. Système optique selon l'une quelconque des revendications précédentes, **caractérisé en ce qu'**il inclut un seul ensemble optique.

16. Système optique selon l'une quelconque des revendications précédentes, **caractérisé en ce que** au moins un ensemble optique est translaté le long d'une direction parallèle à ladite paire de rails (9, 10).
